# EUROPEAN PATENT APPLICATION

(11) **EP 2 447 307 A2**
(43) Date of publication of application: **02.05.2012**
(21) Application number: 11186008.6
(22) Date of filing: 20.10.2011
(51) Int. Cl.: C08J 5/24

(54) **Composite compositions**

(30) Priority: 28.10.2010 US 914305
(71) Applicant: General Electric Company, Schenectady, NY 12345 (US); The Boeing Company, Chicago, IL 60606 (US)
(72) Inventor: Fang, Xiaomei, Niskayuna, NY New York 12309 (US); Lin, Wendy Wen-Ling, Niskayuna, NY New York 12309 (US); Woods, Jack Allen, Kent, WA Washington 98031 (US)
(74) Representative: Szary, Anne Catherine

(57) **Abstract**

In one embodiment, the present invention provides a preform. The preform includes (a) a reinforcing fabric layer; and (b) a thermoplastic block copolymer fiber incorporated into the reinforcing fabric layer. The thermoplastic block copolymer includes methylmethacrylate structural units and is substantially soluble in an uncured epoxy resin and substantially insoluble in a corresponding cured epoxy resin. An uncured composite composition, a cured composite, and a method of making the cured composite are also provided.

## Description

### BACKGROUND

The invention relates to a preform for composites. Further, the invention relates to an uncured composition and a cured composite made employing the preform.

Composite materials made of fibers and a resin matrix are used to produce a wide range of commercial products, from sailboat hulls to aircraft components. Composite structures have a number of advantages, including strength-to-weight-ratios approaching or even surpassing those of the most advanced structural alloys.

Several processes or methods for forming composite bodies or structures are in conventional use. Most of these methods involve the formation of a "layup" or preform of fibrous material, which takes the contours of the finished composite structure. One such method of forming a preform for composite structures is to use a stitched non-crimp fabric as a reinforcing layer. Non-crimp fabrics (NCF) may be advantageous over woven fabrics because the fibers are straighter resulting in increased fiber dominated composite properties such as tension and compression. Further, non-crimp fabrics may be made with different fiber angles compared to woven fabrics and provide the flexibility to include more than two layers in a fabric allowing for efficient manufacture of composites.

The stitches in the non-crimp fabrics are used to hold the plies of the non-crimp fabric together during handling in a predominantly un-crimped manner. Conventional stitches used for non-crimp fabrics (NCFs) are typically insoluble polyester or nylon fibers. The use of such insoluble stitches may lead to the formation of resin-rich areas in the cured NCF composite which in turn lead to microcrack formation in the cured composites induced by residual stress in the resin-rich areas during thermal cycling.

Toughened resin systems containing thermoplastic toughening agents have been reported to improve microcrack resistance of the composites. However, un-toughened resins may be easier to process in the composite manufacture than toughened resins as the resin transfer molding processes used to manufacture the composites typically require that the resin component be characterized by a relatively low injection viscosity in order to allow complete wetting and impregnation of the preform by the resin component. Further, use of untoughened resins for preparing composites may allow for broader selection of low cost resins and processing techniques. Additionally, further improvements in microcrack resistance may be required for toughened resins as well.

Thus, there is a need to select and design optimal non-crimp fabrics that provide toughening agents directly into composite structures resulting in improved microcrack resistance. In addition there is a need to be able to utilize untoughened resin systems along with non-crimp fabrics to prepare composites that display the physical properties and performance enhancements required by the end-use applications. The present invention provides additional solutions to these and other challenges associated with composite compositions.

### BRIEF DESCRIPTION

In one embodiment, the present invention provides a preform. The preform includes (a) a reinforcing fabric layer; and (b) a thermoplastic block copolymer fiber incorporated into the reinforcing fabric layer. The thermoplastic block copolymer includes methylmethacrylate structural units and is substantially soluble in an uncured epoxy resin and substantially insoluble in a corresponding cured epoxy resin.

In one embodiment, the present invention provides an uncured composite composition. The uncured composite composition includes (a) a reinforcing fabric layer; (b) a thermoplastic block copolymer fiber incorporated into the reinforcing fabric layer; and (c) an uncured epoxy resin. The thermoplastic block copolymer includes methyl methacrylate structural units and is substantially soluble in the uncured epoxy resin and substantially insoluble in a corresponding cured epoxy resin.

In one embodiment, the present invention provides a method. The method includes (a) contacting a formulation including an uncured epoxy resin with a reinforcing fabric layer to provide an uncured composite composition, wherein the reinforcing fabric layer includes a thermoplastic block copolymer fiber incorporated therein. The thermoplastic block copolymer includes methyl methacrylate structural units and is substantially soluble in the uncured epoxy resin and substantially insoluble in a corresponding cured epoxy resin.

In one embodiment, the present invention provides a cured composite. The cured composite includes (a) a reinforcing fabric layer; (b) a thermoplastic block copolymer fiber incorporated into the reinforcing fabric layer; and (c) a cured epoxy resin. The thermoplastic block copolymer includes methyl methacrylate structural units and is substantially insoluble in the uncured epoxy resin and substantially soluble in a corresponding uncured epoxy resin.

In one embodiment, the present invention provides a fiber including a thermoplastic block copolymer. The thermoplastic block includes methyl methacrylate structural units and is substantially soluble in an uncured epoxy resin and substantially insoluble in a corresponding cured epoxy resin.

These and other features, embodiments, and advantages of the present invention may be understood more readily by reference to the following detailed description.

### DRAWINGS

These and other features, aspects, and advantages of the present invention will become better understood when the following detailed description is read with reference to the accompanying drawings, wherein:
FIG. 1 is an image of dissolvable stitches in the uncured and cured resins, according to one embodiment of the invention.
FIG. 2 is an image of dissolvable stitches in the cured composites, according to one embodiment of the invention.

### DETAILED DESCRIPTION

In the following specification and the claims, which follow, reference will be made to a number of terms, which shall be defined to have the following meanings.

The singular forms "a", "an" and "the" include plural referents unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", and "substantially" is not to be limited to the precise value specified. In some instances, the approximating language may correspond to the precision of an instrument for measuring the value. Similarly, "free" may be used in combination with a term, and may include an insubstantial number, or trace amounts, while still being considered free of the modified term. Here and throughout the specification and claims, range limitations may be combined and/or interchanged, such ranges are identified and include all the sub-ranges contained therein unless context or language indicates otherwise.

In one embodiment, the present invention provides a preform. The preform includes (a) a reinforcing fabric layer; and (b) a thermoplastic block copolymer fiber incorporated into the reinforcing fabric layer. The thermoplastic block copolymer includes methylmethacrylate structural units and is substantially soluble in an uncured epoxy resin and substantially insoluble in a corresponding cured epoxy resin.

The term "preform" as used herein refers to a pre-shaped fibrous reinforcement structure that may be used with a resin to form a composite structure of the desired shape. In one embodiment, the preform includes a reinforcing fabric layer suitable for manufacturing composite structures from infused liquid resins. In one embodiment, the preform includes a plurality of reinforcing fabric layers or plies stacked together to form the preform of a required thickness.

The term "fabric" as used herein refers to a manufactured assembly of fibers to produce a fibrous structure. The assembly is held together either by mechanical interlocking of the fibers themselves or with a secondary material to bind these fibers together and hold them in place, giving the assembly sufficient integrity to be handled. Fabric types may be categorized by the orientation of the fibers used, and by the various construction methods used to hold the fibers together. As used herein, the term "fiber" includes a single fiber, a filament, a thread, or a plurality of fibers, filaments, or threads. In one embodiment, the term "fiber" includes untwisted or twisted fibers, filaments, or threads. In one embodiment, the term "fiber" includes a strand, a tow, or a yarn.

In one embodiment, the reinforcing fabric layer may be characterized by the fabric type or configuration of fibers within the fabric. In one embodiment, the reinforcing fabric layer includes at least one woven fabric, non-woven fabric, knitted fabric, braided fabric, tailored fiber placement (TFP) fabric, embroidered fabric, or multi-axial axial fabric. In one embodiment, the reinforcing fabric layer includes a plurality of fabric layers (or plies) and at least one of the ply includes one of the above mentioned fabric configurations. Suitable examples of woven fabrics include, but are not limited to polar weaves, spiral weaves, and uniweaves. Suitable examples of nonwoven fabrics include, but are not limited to, mat fabric, felts, veils, and chopped strands mats. Suitable examples of multi-axial fabrics include, but are not limited to, multi warp knitted fabrics, non-crimp fabrics (NCF), and multidirectional fabrics.

In one embodiment, the reinforcing fabric layer includes a unidirectional fabric, that is, all the fibers are oriented in a single orientation. In another embodiment, the reinforcing layer includes a multi-axial fabric. The term "multi-axial" as used herein refers to a fabric where alternate plies of fibers are constructed in several different directions to produce a fabric with optimum strength and stiffness in required directions. In one embodiment, the fibers may be oriented in one or more of the following directions 0°, +30°, -30, +45°, -45°, +60°, -60° or 90°.

In one embodiment, the reinforcing fabric layer includes a multi-axial non-crimp fabric. The term "non-crimp" as used herein refers to fabrics where one or multiple layers of fibers are laid upon each other and transformed into a fabric by stitching or application of a binder such that the fibers remain straight and without substantial crimp.

In one embodiment, the fibers that make up the reinforcing structural fabric include, but are not limited to, spun fibers, extruded fibers, cast fibers, continuous fibers, random fibers, discontinuous fibers, chopped fibers, whiskers, filaments, ribbons, tapes, veils, fleeces, hollow fibers, and combinations thereof.

In one embodiment, the reinforcing fabric layer includes glass fibers, quartz fibers, polymer fibers, or ceramic fibers. Suitable examples of fibers include, but are not limited to, glass fibers (for example, quartz, E-glass, S-2 glass, R-glass from suppliers such as PPG, AGY, St. Gobain, Owens-Corning, or Johns Manville), polyester fibers, polyamide fibers (for example, NYLON® polyamide available from E.I. DuPont, Wilmington, Del., USA), aromatic polyamide fibers (such as KEVLAR® aromatic polyamide available from E.I. DuPont, Wilmington, Del., USA; or P84® aromatic polyamide available from Lenzing Aktiengesellschaft, Austria), polyimide fibers (for example, KAPTON® polyimide available from E.I. DuPont, Wilmington, Del., USA), or extended chain polyethylene (for example, SPECTRA® polyethylene from Honeywell International Inc., Morristown, N.J., USA; and DYNEEMA® polyethylene from Toyobo Co., Ltd.).

In one embodiment, the reinforcing fabric layer includes carbon fibers. Suitable examples of carbon fibers may include, but are not limited to, AS2C, AS4, AS4C, AS4D, AS7, IM6, IM7, IM9, and PV42/850 from Hexcel Corporation; TORAYCA T300, T300J, T400H, T600S, T700S, T700G, T800H, T800S, T1000G, M35J, M40J, M46J, M50J, M55J, M60J, M30S, M30G, and M40from Toray Industries, Inc; HTS12K/24K, G30-500 3K/6K/12K, G30-500 12K, G30-700 12K, G30-700 24K F402, G40-800 24K, STS 24K, HTR 40 F22 24K 1550tex from Toho Tenax, Inc; 34-700, 34-700WD, 34-600, 34-600WD, 34-600 from Grafil inc.; and T-300, T-650/35, T-300C, T-650/35C from Cytec Industries.

As noted, the reinforcing fabric layer further includes a thermoplastic block copolymer fiber incorporated into the reinforcing fabric layer. In one embodiment, the reinforcing fabric layer includes a plurality of thermoplastic copolymer fibers incorporated therein. In one embodiment, the reinforcing fabric layer includes a plurality of plies and at least one ply includes one or more thermoplastic copolymer fiber incorporated therein.

In one embodiment, the present invention provides a fiber including a thermoplastic block copolymer. The thermoplastic block includes methyl methacrylate structural units and is substantially soluble in an uncured epoxy resin and substantially insoluble in a corresponding cured epoxy resin.

In one embodiment, the thermoplastic copolymer fiber includes a single fiber, a filament, a thread, or a plurality of fibers, filaments, or threads. In one embodiment, the thermoplastic copolymer fiber includes untwisted or twisted fibers, filaments, or threads. In one embodiment, the thermoplastic copolymer fiber includes a strand, a tow, or a yarn. Suitable examples of thermoplastic copolymer fibers include, but are not limited to, spun fibers, extruded fibers, cast fibers, continuous fibers, random fibers, discontinuous fibers, chopped fibers, whiskers, filaments, ribbons, tapes, hollow fibers, veils, fleeces, and combinations thereof.

In one embodiment, the thermoplastic copolymer fiber is a monofilament. In another embodiment, the thermoplastic copolymer fiber is a yarn made of plurality of monofilaments. The thermoplastic block copolymer fiber may be characterized by the diameter of the monofilament or the yarn (if the yarn includes a plurality of monofilaments). In one embodiment, the thermoplastic block copolymer fiber includes a monofilament having a diameter in a range of from about 1 micron to about 100 microns. In another embodiment, the thermoplastic block copolymer fiber includes a plurality of monofilaments each having a diameter in a range of from about 1 micron to about 100 microns.

In one embodiment, the thermoplastic block copolymer includes structural units that render the thermoplastic copolymer fiber substantially soluble in an uncured epoxy resin. In one embodiment, the structural units are physically compatible with the uncured epoxy resin rendering the thermoplastic copolymer fiber substantially soluble in an uncured epoxy resin. In another embodiment, the structural units are chemically compatible with the uncured epoxy resin rendering the thermoplastic copolymer fiber substantially soluble in an uncured epoxy resin. In yet another embodiment, the thermoplastic block copolymer fiber includes structural units that are chemically reactive with the uncured epoxy resin. The structural units may e chemically reactive with the epoxy monomer, the curing agent, or both the epoxy monomer and the curing rent. In one embodiment, the thermoplastic block copolymer fiber includes structural units that are capable of hydrogen-bond formation with the uncured epoxy resin. In another embodiment, the thermoplastic block copolymer fiber includes structural units that are capable of polar bond formation with the uncured epoxy resin. In one embodiment, the thermoplastic block copolymer includes methylmethacrylate structural units.

In one embodiment, the thermoplastic block copolymer fiber further includes structural units that substantially render the thermoplastic copolymer fiber insoluble in the cured epoxy resin. In one embodiment, the thermoplastic block copolymer fiber further includes structural units that are incompatible with the methylmethacrylate structural units and phase separate in the cured epoxy resin.

In one embodiment, the thermoplastic block copolymer is a diblock copolymer. In another embodiment, the thermoplastic block copolymer is a triblock copolymer. In one embodiment, the thermoplastic block copolymer is a block copolymer of polymethylmethacrylate and one or more of the following: polyolefin (for example, polybutadiene), polyester, polyamide, polysulfone, polyimide, polyetherimide, polyether sulfone, polyphenylene sulfide, polyether ketone, polyether ether ketone, polystyrene, polyacrylate, polyacrylonitrile, polybutadiene, polyacetal, polycarbonate, polyphenylene ether, polyethylene-vinyl acetate, or polyvinyl acetate.

In one embodiment, the thermoplastic block copolymer is a block copolymer including two polymethylmethacrylate blocks and a polybutylacrylate block and may be represented as PMMA-PBA-PMMA. In another embodiment, the thermoplastic block copolymer includes a polystyrene block, a polybutadiene block and a polymethylmethacrylate block and may be represented as PS-PBd-PMMA.

In one embodiment, the thermoplastic block copolymer has a number-average molecular in a range of from about 20000 g/mol to about 400000 g/mol. In another embodiment, the thermoplastic block copolymer block copolymer has a number-average molecular in a range of from about 40000 g/mol to about 200000 g/mol. In yet another embodiment, the thermoplastic block copolymer block copolymer has a number-average molecular in a range of from about 50000 g/mol to about 100000 g/mol.

In one embodiment, the thermoplastic block copolymer includes methylmethacrylate structural units present in an amount in a range of from 10 weight percent to about 80 weight percent of the thermoplastic block copolymer. In another embodiment, the thermoplastic block copolymer includes methylmethacrylate structural units present in an amount in a range of from 20 weight percent to about 70 weight percent of the thermoplastic block copolymer. In yet another embodiment, the thermoplastic block copolymer includes methylmethacrylate structural units present in an amount in a range of from 30 weight percent to about 60 weight percent of the thermoplastic block copolymer.

In one embodiment, the thermoplastic block copolymer fiber is incorporated into the reinforcing fabric layer by a technique selected from one of the following: stitching, knitting, tufting, warp knitting, crimping, punching, weaving, uniweaving, braiding, overwinding, intermeshing, commingling, aligning, twisting, coiling, knotting, threading, matting, co-weaving, spun bonding, spraying, laminating, veil thermal bonding, or veil stitching.

In one embodiment, the thermoplastic block copolymer fiber is incorporated into the reinforcing fabric layer in the form of stitches. In one embodiment, the stitching runs substantially transversely through the plies and follows a predetermined pattern. The pattern may be tricot closed, open pillar stitch, closed pillar stitch, open tricot-pillar stitch, or closed tricot-pillar stitch or variants thereof. In one embodiment, the thermoplastic block copolymer fiber is incorporated into the reinforcing fabric layer in the form of traceless stitches.

In one embodiment, the thermoplastic block copolymer fiber is present in an amount in a range of from about 0.1 weight percent to about 30 weight percent based upon a total weight of the preform. In another embodiment, the thermoplastic block copolymer fiber is present in an amount in a range of from about 0.5 weight percent to about 20 weight percent based upon a total weight of the preform. In yet another embodiment, the thermoplastic block copolymer fiber is present in an amount in a range of from about 1 weight percent to about 10 weight percent based upon a total weight of the preform.

In one embodiment, within each of the layers of the reinforcing fabric layer, the number ratio of thermoplastic copolymer fibers to the reinforcing fibers is in a range of from about 0.1 to 99 to about 99:1. In another embodiment, within each of the layers of the reinforcing fabric layer, the number ratio of thermoplastic copolymer fibers to the reinforcing fibers is in a range of from about 20:80 to about 80:20. In yet another embodiment, within each of the layers of the reinforcing fabric layer, the number ratio of thermoplastic copolymer fibers to the reinforcing fibers is in a range of from about 30:70 to about 70:30.

As described hereinabove, the thermoplastic block copolymer fiber is substantially soluble in an uncured epoxy resin and substantially insoluble in the cured epoxy resin. In one embodiment, the thermoplastic block copolymer fiber is designed to substantially dissolve during the preliminary stages of the curing process. In one embodiment, the thermoplastic block copolymer fiber is designed to substantially dissolve during ramping of the temperature to the cure temperature of the epoxy resin. In one embodiment, the dissolution temperature of the thermoplastic block copolymer is below that of the cure temperature of the resin. In one embodiment, the thermoplastic block copolymer fiber is substantially soluble in the uncured epoxy resin at a temperature in a range of from about 25 degrees Celsius to about 180 degrees Celsius. In another embodiment, the thermoplastic block copolymer fiber is substantially soluble in the uncured epoxy resin at a temperature in a range of from about 40 degrees Celsius to about 160 degrees Celsius. In yet another embodiment, the thermoplastic block copolymer fiber is substantially soluble in the uncured epoxy resin at a temperature in a range of from about 60 degrees Celsius to about 140 degrees Celsius.

As used herein, the term "substantially soluble" refers to dissolution of the thermoplastic copolymer fiber into the uncured epoxy resin at a concentration greater than about 0.1 weight percent of the thermoplastic copolymer fiber incorporated into the reinforcing fabric layer. In one embodiment, the thermoplastic block copolymer fiber is soluble in the uncured epoxy resin at concentration greater than about 1 weight percent of the thermoplastic copolymer fiber incorporated into the reinforcing fabric layer. In another embodiment, the thermoplastic block copolymer fiber is soluble in the uncured epoxy resin at concentration greater than about 10 weight percent of the thermoplastic copolymer fiber incorporated into the reinforcing fabric layer. In yet another embodiment, the thermoplastic block copolymer fiber is soluble in the uncured epoxy resin at concentration greater than about 30 weight percent of the thermoplastic copolymer fiber incorporated into the reinforcing fabric layer.

In one embodiment, the thermoplastic block copolymer is substantially insoluble in the cured epoxy resin. In one embodiment, the thermoplastic block copolymer substantially phase separates and forms a nanoparticulate thermoplastic block copolymeric discontinuous phase in the cured epoxy resin. In one embodiment, the nanoparticulate thermoplastic block copolymeric discontinuous phase has a domain size distribution in a range of from about 1 nanometer to about 1000 nanometers. In another embodiment, the nanoparticulate thermoplastic block copolymeric discontinuous phase has a domain size distribution in a range of from about 1 nanometer to about 500 nanometers. In yet another embodiment, the nanoparticulate thermoplastic block copolymeric discontinuous phase has a domain size distribution in a range of from about 1 nanometer to about 250 nanometers. In yet still another embodiment, the nanoparticulate thermoplastic block copolymeric discontinuous phase has a domain size distribution in a range of from about 1 nanometer to about 100 nanometers. In one embodiment, the discontinuous phase can take the form of agglomerates of smaller nanoparticles. In another embodiment, the agglomerates of smaller nanoparticles can have a domain size in a range of from about 10 nanometers to about 500 microns.

In one embodiment, the thermoplastic block copolymer fiber is substantially undetectable in the cured epoxy resin. In one embodiment, the thermoplastic copolymer fiber further enhances the mechanical properties of the cured epoxy resin. In one embodiment, the thermoplastic copolymer fiber functions as a toughening agent in the cured epoxy resin. In one embodiment, the thermoplastic block copolymer is substantially uniformly dispersed in the cured epoxy resin and improves the microcrack resistance of the cured composite.

In one embodiment, the present invention provides an uncured composite composition. The uncured composite composition includes (a) a reinforcing fabric layer; (b) a thermoplastic block copolymer fiber incorporated into the reinforcing fabric layer; and (c) an uncured epoxy resin.

In one embodiment, an uncured epoxy resin includes a reactive monomer having at least one reactive epoxy group. In one embodiment, an uncured epoxy resin includes a reactive monomer having a plurality of reactive epoxy groups. In one embodiment, the uncured epoxy resin includes at least one monomer having two epoxy groups, the uncured epoxy resin being converted to a cured epoxy resin upon treatment with a curing agent. In one embodiment, the uncured epoxy resin includes at least one monomer having more than two epoxy groups, the uncured epoxy resin being converted to a cured epoxy resin upon treatment with a curing agent.

In one embodiment, an uncured epoxy resin includes one or more of the following components: polyhydric phenol polyether alcohols, glycidyl ethers of novolac resins such as epoxylated phenol-formaldehyde novolac resin, glycidyl ethers of mononuclear di-and trihydric phenols, glycidyl ethers of bisphenols such as the diglycidyl ether of tetrabromobisphenol A, glycidyl ethers of polynuclear phenols, glycidyl ethers of aliphatic polyols, glycidyl esters such as aliphatic diacid diglycidyl esters, glycidyl epoxies containing nitrogen such as glycidyl amides and amide- containing epoxies, glycidyl derivatives of cyanuric acid, glycidyl resins from melamines, glycidyl amines such as triglycidyl ether amine of p-aminophenol, glycidyl triazines, thioglycidyl ethers, silicon-containing glycidyl ethers, monoepoxy alcohols, glycidyl aldehyde, 2, 2'-diallyl bisphenol A diglycidyl ether, butadiene dioxide, or bis(2,3-epoxycyclopentyl)ether.

In one embodiment, an uncured epoxy resin includes one or more of the following components: octadecylene oxide, epichlorohydrin, styrene oxide, vinylcyclohexene oxide, glycidyl methacrylate, diglycidyl ether of Bisphenol A (for example, those available under the trade designations "EPON 828," "EPON 1004," and "EPON 1001 F" from Shell Chemical Co., Houston, Tex., and "DER-332" and "DER-334", from Dow Chemical Co., Midland, Mich.), diglycidyl ether of Bisphenol F (for example, those under the trade designations "ARALDITE GY281" from Ciba-Geigy Corp., Hawthorne, N.Y., and "EPON 862" from Shell Chemical Co.), vinylcyclohexene dioxide (for example the product designated "ERL 4206" from Union Carbide Corp., Danbury, Conn.), 3,4-epoxycyclohexyl-methyl-3,4-epoxycyclohexene carboxylate (for example the product designated "ERL-4221" from Union Carbide Corp.), 2-(3,4-epoxycyclohexyl-5,5-spiro-3,4-epoxy) cyclohexane-metadioxane (for example the product designated "ERL-4234" from Union Carbide Corp.), bis(3,4-epoxycyclohexyl) adipate (for example the product designated "ERL-4299" from Union Carbide Corp.), dipentene dioxide (for example the product designated "ERL-4269" from Union Carbide Corp.), epoxidized polybutadiene (for example the product designated "OXIRON 2001" from FMC Corp.), epoxy silanes for example, beta-3,4-epoxycyclohexylethyltrimethoxysilane and gamma-glycidyloxypropyltrimethoxysilane, 1,4-butanediol diglycidyl ether (for example the product designated "ARALDITE RD-2" from Ciba-Geigy Corp.), hydrogenated bisphenol A diglycidyl ether (for example the product designated "EPONEX 1510" from Shell Chemical Co.), or polyglycidyl ethers of phenol-formaldehyde novolaks (for example the products designated "DEN-431" and "DEN-438" from Dow Chemical Co.).

In one embodiment, the uncured epoxy resin includes one or more of "Cycom 977-2" "Cycom 977-20", "Cycom PR520" and "Cycom 5208" available commercially from Cytec Engineered Materials Inc., (Tempe, Arizona); "HexFLow RTM-6", "HexFlow VRM 34" available commercially from Hexcel (Dublin, CA), or "LX70412.0" available commercially from Henkel-Loctite (BayPoint, CA).

In one embodiment, the uncured epoxy resin is present in the uncured composite composition in an amount in a range of from about 10 volume percent to about 80 volume percent based upon a total volume of the uncured composite composition. In another embodiment, the uncured epoxy resin is present in the uncured composite composition in an amount in a range of from about 20 volume percent to about 70 volume percent based upon a total volume of the uncured composite composition. In yet another embodiment, the uncured epoxy resin is present in the uncured composite composition in an amount in a range of from about 30 volume percent to about 60 volume percent based upon a total volume of the uncured composite composition.

In one embodiment, the reinforcing fabric layer is present in the uncured composite composition in an amount in a range of from about 20 volume percent to about 90 volume percent based upon a total volume of the uncured composite composition. In another embodiment, the reinforcing fabric layer is present in the uncured composite composition in an amount in a range of from about 30 volume percent to about 80 volume percent based upon a total volume of the uncured composite composition. In yet another embodiment, the reinforcing fabric layer is present in the uncured composite composition in an amount in a range of from about 40 volume percent to about 70 volume percent based upon a total volume of the uncured composite composition.

In one embodiment, the present invention provides a method. The method includes (a) contacting a formulation including an uncured epoxy resin with a reinforcing fabric layer to provide an uncured composite composition, wherein the reinforcing fabric layer includes a thermoplastic block copolymer fiber incorporated therein.

In one embodiment, the method includes the step of incorporating the thermoplastic polymer fiber into the reinforcing fabric layer. In one embodiment, the method may further include stacking and cutting the layers or plies of structural fabric after the step of incorporating the stabilizing fiber into the structural fabric. In one embodiment, the method further includes the step of shaping the layers of reinforcing fabric after the layers have been stacked and cut.

The resulting reinforcing fabric layer is contacted with a formulation including an uncured epoxy resin. In one embodiment, contacting may be carried out under Scrimp brand molding, hand lay-up, compression molding, pultrusion molding, "B stage" forming, autoclave molding, resin transfer molding (RTM), liquid resin infusion (LRI), resin infusion flexible tooling (RIFT), vacuum assisted Resin transfer molding (VARTM), resin film infusion (RFI) conditions.

In one embodiment, the method includes injecting a formulation containing an uncured epoxy resin into the reinforcing fabric layer. In one embodiment, the method includes infusing a formulation containing an uncured resin into a reinforcing fabric layer using the vacuum assisted resin transfer method (hereinafter known as "VARTM"). The terms inject and infuse and injecting and infusing are interchangeably used herein.

In one embodiment, infusion or injection may be at ambient or at a temperature less than the dissolution temperature of the thermoplastic block copolymer. In one embodiment, the contacting is carried out by infusing the uncured epoxy resin into the reinforcing fabric layer at an infusion temperature in a range of from about 15°C to about 150°C. In another embodiment, the contacting is carried out by infusing the uncured epoxy resin into the reinforcing fabric layer at an infusion temperature in a range of from about 30°C to about 120°C. In yet another embodiment, the contacting is carried out by infusing the uncured epoxy resin into the reinforcing fabric layer at an infusion temperature in a range of from about 45°C to about 100°C.

In one embodiment, the present invention provides an uncured composite composition, which is suitable for use in the preparation of a cured composite composition owing to the relatively low viscosities of the uncured epoxy resin. In one embodiment, the uncured epoxy resin used to prepare the cured epoxy composite has especially good viscosity characteristics for completely and uniformly contacting the reinforcing fabric layer during the infusion process.

In one embodiment, the formulation includes an uncured epoxy resin and an additional toughening agent. In one embodiment, the formulation including the uncured epoxy resin and the toughening agent has a viscosity suitable for the infusion process. In one embodiment, the uncured epoxy resin is substantially free of a toughening agent and the uncured epoxy resin has a viscosity suitable for the infusion process. In one embodiment, the formulation including the uncured epoxy resin has a viscosity in a range of from about 5 centiPoise to about 1200 centiPoise at the infusion temperature (temperature at which the infusion step is to be carried out). In another embodiment, the formulation has a viscosity in a range of from about 10 centiPoise to about 500 centiPoise at the infusion temperature. In yet another embodiment, the formulation has a viscosity in a range of from about 20 centiPoise to about 100 centiPoise at the infusion temperature.

In one embodiment, the method further includes heating the uncured composite composition to substantially dissolve the thermoplastic block copolymer. In one embodiment, the uncured composition is heated to a temperature in a range of from about 30°C to about 220°C. In another embodiment, the uncured composition is heated to a temperature in a range of from about 50°C to about 200°C. In yet another embodiment, the uncured composition is heated to a temperature in a range of from about 75°C to about 150°C.

In one embodiment, the method further includes curing the uncured composite composition to provide a cured composite. In one embodiment, curing is carried out by subjecting the uncured composite composition to heat, pressure, or both heat and pressure. In one embodiment, curing is carried out by applying heat to the uncured composite composition using a heat source selected from infrared, microwave, convection, induction, ultrasonic, radiant and combinations thereof.

In one embodiment, curing is carried out by heating the uncured composition to a temperature in a range of from 50°C to about 250°C. In another embodiment, curing is carried out by heating the uncured composition to a temperature in a range of from 80°C to about 220°C. In yet another embodiment, curing is carried out by heating the uncured composition to a temperature in a range of from 100°C to about 180°C.

In one embodiment, the present invention provides a cured composite. The cured composite includes (a) a reinforcing fabric layer; (b) a thermoplastic block copolymer fiber incorporated into the reinforcing fabric layer; and (c) a cured epoxy resin. The thermoplastic block copolymer includes methyl methacrylate structural units and is substantially insoluble in the uncured epoxy resin and substantially soluble in a corresponding uncured epoxy resin.

In one embodiment, the cured composite is resistant to microcrack formation. In one embodiment, the cured composite has a microcrack length less than about 10000 microns on the cross-section of a standard test coupon after 2000 cycles of the thermal-humidity test in a range of from about -54 °C to about 71 °C. In one embodiment, the cured composite has a microcrack length less than about 5000 microns on the cross-section of a standard test coupon after 2000 cycles of the thermal-humidity test in a range of from about -54 °C to about 71 °C. In one embodiment, the cured composite has a microcrack length less than about 1000 microns on the cross-section of a standard test coupon after 2000 cycles of the thermal-humidity test in a range of from about -54 °C to about 71 °C.

In one embodiment, an article is provided. The article includes the cured composite as described hereinabove. In one embodiment, the article is useful in aviation and aerospace applications requiring a combination of high strength and lightweight. In one embodiment, the article is a component of an aircraft, for example, wing, fuselage, or aircraft engine turbine blade. In one embodiment, the article is a component of an aircraft engine. In another embodiment, the article has applications in spacecraft, load bearing structures in automobiles, construction materials such as beams and roofing materials, personal communication devices such as cell phones, furniture such as tables and chairs, sporting goods such as tennis racquets and golf clubs, seating for sports facilities, load bearing structures in train carriages and locomotives, load bearing structures in personal watercraft, sail boats, and ships, and non-load bearing structures requiring a combination of high strength and light weight in any of the forgoing applications.

### EXAMPLES

The following examples illustrate methods and embodiments in accordance with the invention. Unless specified otherwise, all ingredients may be commercially available from such common chemical suppliers as Alpha Aesar, Inc. (Ward Hill, Massachusetts), Sigma Aldrich (St. Louis, Missouri), Spectrum Chemical Mfg. Corp. (Gardena, California), and the like.

Epoxy resin RTM6 (obtained from Hexcel, Dublin, CA) was used as the uncured resin for all the composites unless specified otherwise. Polymethyl methacrylate block copolymers PMMA-PBA-PMMA (M22, M22N) and PMMA-PBd-PS (E20) commercially available from Arkema Inc. were drawn into fibers and used as stitches. A carbon non-crimp fabric (NCF) (T700GC, +60°/0°/ 0°/ -60°) with polyester stitches from Hexcel was used in the study to prepare the reinforcing fabric layer. The polyester stitches were removed from the fabrics. The PMMA-PBA-PMMA (M22, M22N) and PMMA-PBd-PS (E20) fibers were manually stitched into the NCF fabrics with similar stitch tightness and pattern, in order to compare the fabrics with non-dissolvable stitches with the fabric with dissolvable stitches.

### Preparation of cured composites using PMMA triblock copolymers (Examples 1 -3).

Five to seven plies of Hexcel NCF fabric (T700G fiber) having M22 stitches were sealed in a nylon vacuum bag film enclosure having a resin inlet and outlet to attain a vacuum level of about 30 mm Hg (full vacuum). As an optional step, a second layer of vacuum bag film could be applied if the first layer of vacuum bag film proved to be insufficient to achieve a full vacuum. The assembly was heated to about 90°C while being subjected to an applied vacuum. Uncured resin formulation containing RTM6 resin (from Hexcel, Dublin, CA) was heated to 80 °C and placed in a feed chamber and allowed to degas under full vacuum. Prior to infusion, the vacuum on the feed chamber was reduced to - 10 in Hg. Once the part was completely filled, the inlet and outlet lines were pinched off from resin feed and vacuum. The resin-filled assembly was cured under vacuum at 180°C for 2 hours to provide a void free cured composite panel (Example 1). NCF fabric having M22N and E20 stitches were similarly used to prepare cured composite panels (Example 2 and Example 3, respectively) using the method described herein above.

Solubility test for PMMA block copolymers in epoxy resin and composites

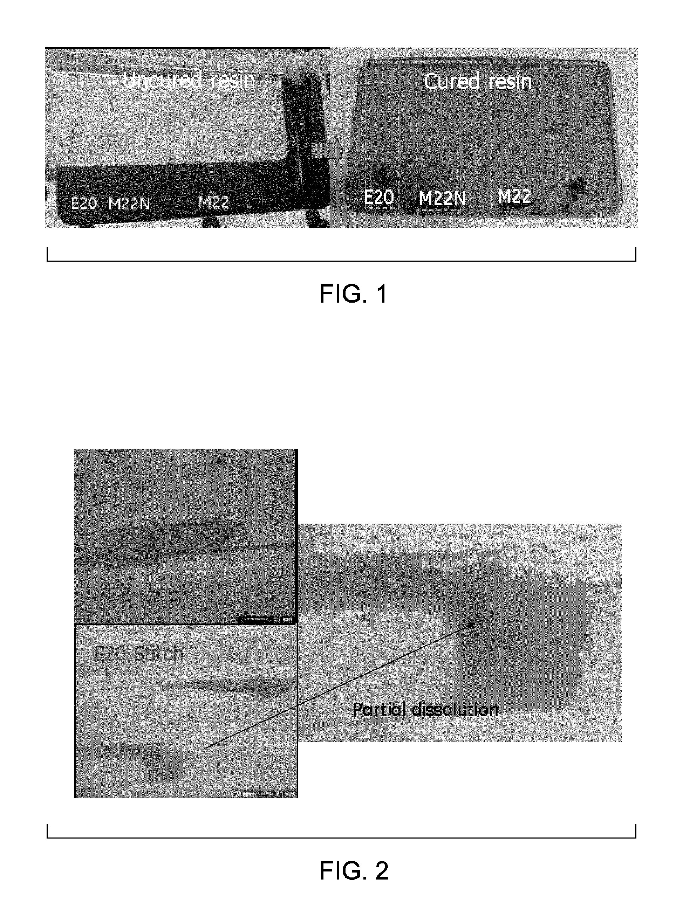

The PMMA block copolymer fibers M20, M22N, and E20 were placed in a RTM 6 resin plaque to assess the solubility of the stitches. As shown in FIG. 1, the M22 and M22N stitches completely disappeared, but the E20 stitch remained visible after the cure process. This indicated that M22 and M22N fibers have higher solubility in the RTM 6 resin than the E20 fiber.

FIG. 2 shows that both the M22 and E20 stitches are partially dissolved in the composites fabricated using these stitches (Example 1 and Example 3).

Microcrack analysis of composites prepared using NCF fabrics stitched with PMMA block copolymers

After infusion the composite parts were cut with a water jet and subjected to thermal shock cycling. Thermal humidity cycling of the composite panels was conducted using a Thermotron environmental chamber. The thermal shock chamber consists of two compartments; high temperature (71°C) and low temperature (-54°C). The parts were held for five minutes in each chamber, which constituted one cycle. The composite panels were placed in a vertical position with a standing-free style during the cycling.

Samples were checked with optical microscopy for signs of microcracking after 400 to 2000 cycles. Microcracks were analyzed using a microscope with a magnification of 50x and using internally developed automated image analysis software. The microcrack number and lengths were determined in a total cross-section of 5.5" by 1/8" combining three cut directions (0°, 90°, and 45°) on each sample.

No microcracks were observed for composites prepared using dissolvable PMMA block copolymers stitches (Examples 1-3).

The foregoing examples are merely illustrative, serving to exemplify only some of the features of the invention. The appended claims are intended to claim the invention as broadly as it has been conceived and the examples herein presented are illustrative of selected embodiments from a manifold of all possible embodiments. Accordingly, it is the Applicants' intention that the appended claims are not to be limited by the choice of examples utilized to illustrate features of the present invention. As used in the claims, the word "comprises" and its grammatical variants logically also subtend and include phrases of varying and differing extent such as for example, but not limited thereto, "consisting essentially of" and "consisting of." Where necessary, ranges have been supplied; those ranges are inclusive of all sub-ranges there between. It is to be expected that variations in these ranges will suggest themselves to a practitioner having ordinary skill in the art and where not already dedicated to the public, those variations should where possible be construed to be covered by the appended claims. It is also anticipated that advances in science and technology will make equivalents and substitutions possible that are not now contemplated by reason of the imprecision of language and these variations should also be construed where possible to be covered by the appended claims.

Various aspects and embodiments of the present invention are defined by the following numbered clauses:
1. A preform, comprising:
   (a) a reinforcing fabric layer; and
   (b) a thermoplastic block copolymer fiber incorporated into the reinforcing fabric layer;
   wherein the thermoplastic block copolymer comprises methylmethacrylate structural units and is substantially soluble in an uncured epoxy resin and substantially insoluble in a corresponding cured epoxy resin.
2. The preform according to clause 1, wherein the thermoplastic block copolymer comprises a polymethylmethacrylate block and a polybutylacrylate block.
3. The preform according to clause 1, wherein the thermoplastic block copolymer comprises a polymethylmethacrylate block, a polybutadiene block, and a polystyrene block.
4. The preform according to clause 1, wherein the thermoplastic block copolymer fiber is present in the preform in an amount in a range of from about 0.1 weight percent to about 30 weight percent based upon a total weight of the preform.
5. The preform according to clause 1, wherein the thermoplastic block copolymer fiber has an average diameter in a range of from about 1 micron to about 100 microns.
6. The preform according to clause 1, wherein the thermoplastic block copolymer fiber is soluble in the uncured epoxy resin at a temperature in a range of from about 70 degrees Celsius to about 140 degrees Celsius.
7. The preform according to clause 1, wherein the reinforcing fabric layer comprises a non-crimp fabric.
8. An uncured composite composition, comprising:
   (a) a reinforcing fabric layer;
   (b) a thermoplastic block copolymer fiber incorporated into the reinforcing fabric layer; and
   (c) an uncured epoxy resin;
   wherein the thermoplastic block copolymer comprises methyl methacrylate structural units and is substantially soluble in the uncured epoxy resin and substantially insoluble in a corresponding cured epoxy resin.
9. The uncured composite composition according to clause 8, wherein the thermoplastic block copolymer comprises a polymethylmethacrylate block and a polybutylacrylate block.
10. The uncured composite composition according to clause 8, wherein the thermoplastic block copolymer comprises a polymethylmethacrylate block, a polybutadiene block, and a polystyrene block.
11. The uncured composite composition according to clause 8, wherein the thermoplastic block copolymer fiber is present in the uncured composite composition in an amount in a range of from about 0.1 weight percent to about 30 weight percent based upon a total weight of the uncured composite composition.
12. A method, comprising:
   (a) contacting a formulation comprising an uncured epoxy resin with a reinforcing fabric layer to provide an uncured composite composition, wherein the reinforcing fabric layer comprises a thermoplastic block copolymer fiber incorporated therein; said thermoplastic block copolymer comprising methyl methacrylate structural units and is substantially soluble in the uncured epoxy resin and substantially insoluble in a corresponding cured epoxy resin.
13. The method according to clause 12, comprising curing the uncured composite composition to provide a cured composite.
14. The method according to clause 12, wherein the contacting is carried out by infusing the uncured epoxy resin into the reinforcing fabric layer at an infusion temperature in a range of from about 15 degrees Celsius to about 150 degrees Celsius.
15. The method according to clause 12, wherein the contacting is carried out under vacuum assisted resin transfer method conditions at the infusion temperature.
16. The method according to clause 12, wherein the formulation has a viscosity in a range of from about 15 centiPoise to about 1200 centiPoise at the infusion temperature.
17. A cured composite, comprising:
   a) a reinforcing fabric layer;
   (b) a thermoplastic block copolymer fiber incorporated into the reinforcing fabric layer; and
   (c) a cured epoxy resin;
   wherein the thermoplastic block copolymer comprises methyl methacrylate structural units and is substantially insoluble in the uncured epoxy resin and substantially soluble in a corresponding uncured epoxy resin.
18. An article, comprising the cured composite of clause 17.
19. The article according to clause 17, wherein the article is a component of an aircraft engine.
20. A fiber, comprising:
   a thermoplastic block copolymer, wherein the thermoplastic block comprises methyl methacrylate structural units and is substantially soluble in an uncured epoxy resin and substantially insoluble in a corresponding cured epoxy resin.

## Claims

1. A preform, comprising:
(a) a reinforcing fabric layer; and
(b) a thermoplastic block copolymer fiber incorporated into the reinforcing fabric layer;
wherein the thermoplastic block copolymer comprises methylmethacrylate structural units and is substantially soluble in an uncured epoxy resin and substantially insoluble in a corresponding cured epoxy resin.

2. The preform according to claim 1, wherein the thermoplastic block copolymer comprises a polymethylmethacrylate block and a polybutylacrylate block.

3. The preform according to claim 1, wherein the thermoplastic block copolymer comprises a polymethylmethacrylate block, a polybutadiene block, and a polystyrene block.

4. The preform according to any preceding claim, wherein the thermoplastic block copolymer fiber is present in the preform in an amount in a range of from about 0.1 weight percent to about 30 weight percent based upon a total weight of the preform.

5. The preform according to any preceding claim, wherein the thermoplastic block copolymer fiber has an average diameter in a range of from about 1 micron to about 100 microns.

6. The preform according to any preceding claim, wherein the thermoplastic block copolymer fiber is soluble in the uncured epoxy resin at a temperature in a range of from about 70 degrees Celsius to about 140 degrees Celsius.

7. The preform according to any preceding claim, wherein the reinforcing fabric layer comprises a non-crimp fabric.

8. An uncured composite composition, comprising:
(a) a reinforcing fabric layer;
(b) a thermoplastic block copolymer fiber incorporated into the reinforcing fabric layer; and
(c) an uncured epoxy resin;
wherein the thermoplastic block copolymer comprises methyl methacrylate structural units and is substantially soluble in the uncured epoxy resin and substantially insoluble in a corresponding cured epoxy resin.

9. The uncured composite composition according to claim 8, wherein the thermoplastic block copolymer comprises a polymethylmethacrylate block and a polybutylacrylate block.

10. The uncured composite composition according to claim 8, wherein the thermoplastic block copolymer comprises a polymethylmethacrylate block, a polybutadiene block, and a polystyrene block.

11. The uncured composite composition according to any one of claims 8 to 10, wherein the thermoplastic block copolymer fiber is present in the uncured composite composition in an amount in a range of from about 0.1 weight percent to about 30 weight percent based upon a total weight of the uncured composite composition.

12. A method, comprising:
(a) contacting a formulation comprising an uncured epoxy resin with a reinforcing fabric layer to provide an uncured composite composition, wherein the reinforcing fabric layer comprises a thermoplastic block copolymer fiber incorporated therein;
said thermoplastic block copolymer comprising methyl methacrylate structural units and is substantially soluble in the uncured epoxy resin and substantially insoluble in a corresponding cured epoxy resin.

13. The method according to claim 12, comprising curing the uncured composite composition to provide a cured composite.

14. The method according to claim 12 or claim 13, wherein the contacting is carried out by infusing the uncured epoxy resin into the reinforcing fabric layer at an infusion temperature in a range of from about 15 degrees Celsius to about 150 degrees Celsius.

15. The method according to any one of claims 12 to 14, wherein the contacting is carried out under vacuum assisted resin transfer method conditions at the infusion temperature.
